# EUROPEAN PATENT APPLICATION

(11) **EP 4 195 389 A1**
(43) Date of publication of application: **14.06.2023**
(21) Application number: 21852758.8
(22) Date of filing: 22.06.2021
(51) Int. Cl.: H01M 50/262, H01G 11/12, H01G 11/78, H01M 50/209, H01M 50/242

(54) **POWER STORAGE DEVICE**

(30) Priority: 04.08.2020 JP 2020132211
(71) Applicant: GS Yuasa International Ltd., Kisshoin, Minami-ku, Kyoto-shi, Kyoto 601-8520 (JP)
(72) Inventor: HASEGAWA, Yo, Kyoto-shi, Kyoto 601-8520 (JP)
(74) Representative: Grünecker Patent- und Rechtsanwälte PartG mbB
(86) International application number: PCT/JP2021/023526
(87) International publication number: WO 2022/030121

(57) **Abstract**

An energy storage apparatus (10) includes an energy storage device (210) including an electrode terminal (210b), an outer case (100) accommodating the energy storage device (210), and a first plate-shaped member (231). The outer case (100) includes a bottom wall portion (111) which is a wall portion on an installation surface side where the energy storage apparatus (10) is installed. The first plate-shaped member (231) is disposed inside the outer case (100), and is disposed at an end portion of the energy storage device (210) in a first direction which is an arrangement direction of the energy storage device (210) and the bottom wall portion (111). The energy storage device (210) is disposed in a posture where the electrode terminal (210b) is directed in a second direction which is a direction intersecting with the first direction and extending along the bottom wall portion (111). The first plate-shaped member (231) includes a first protruding portion (235) which protrudes more than the energy storage device (210) in the Y axis minus direction.

## Description

### TECHNICAL FIELD

The present invention relates to an energy storage apparatus including an energy storage device and an outer case which accommodates the energy storage device.

### BACKGROUND ART

Patent Document 1 discloses an energy storage apparatus which includes a plurality of energy storage devices arranged in a first direction and an outer case which accommodates the plurality of energy storage devices. In this energy storage apparatus, with respect to an energy storage device at an end portion in the first direction among the plurality of energy storage devices, an end plate which is brought into contact with a side surface of the energy storage device in the first direction is disposed. The end plate includes a lid body contact portion which is brought into contact with a lid body of a case of the energy storage device. Accordingly, the lid body is prevented from being inclined or deformed with respect to the case body.

### PRIOR ART DOCUMENT

### PATENT DOCUMENT

Patent Document 1: JP-A-2019-79599

### SUMMARY OF THE INVENTION

### PROBLEMS TO BE SOLVED BY THE INVENTION

In the conventional energy storage apparatus, how to protect the energy storage apparatus from an external force is a problem.

An object of the present invention is to provide an energy storage apparatus capable of improving safety.

### MEANS FOR SOLVING THE PROBLEMS

An energy storage apparatus according to one aspect of the present invention includes: an energy storage device including an electrode terminal; an outer case which accommodates the energy storage device, the outer case including an outer case body including an opening and a lid body which closes the opening, the outer case body including a bottom wall portion facing the lid body; and a first plate-shaped member disposed inside the outer case and disposed at an end portion of the energy storage device in a first direction which is an arrangement direction of the energy storage device and the bottom wall portion, in which the energy storage device is disposed in a posture in which the electrode terminal is directed in a second direction which is a direction intersecting with the first direction and extending along the bottom wall portion, and in which the first plate-shaped member includes a first protruding portion which protrudes more than the energy storage device in the second direction.

### ADVANTAGES OF THE INVENTION

According to the energy storage apparatus of the present invention, the safety can be improved.

### BRIEF DESCRIPTION OF THE DRAWINGS

Fig. 1 is a perspective view showing an external appearance of an energy storage apparatus according to an embodiment.
Fig. 2 is a perspective view showing the inside of an outer case by separating a body and a lid of the outer case in the energy storage apparatus according to the embodiment.
Fig. 3 is an exploded perspective view showing components inside the outer case of the energy storage apparatus according to the embodiment in an exploded manner.
Fig. 4 is an exploded perspective view showing respective components of an energy storage device unit according to the embodiment in an exploded manner.
Fig. 5 is a perspective view showing a positional relationship between a first protruding portion and a second protruding portion and energy storage devices and bus bars according to the embodiment.
Fig. 6 is a side view corresponding to Fig. 5.
Fig. 7 is a perspective view showing a configuration of a first opening portion and its periphery according to the embodiment.
Fig. 8 is an exploded perspective view showing a structural relationship between the first plate-shaped member and the bus bar frame according to the embodiment.
Fig. 9 is a cross-sectional view of a state in which the first plate-shaped member and the bus bar frame according to the embodiment are combined.

### MODE FOR CARRYING OUT THE INVENTION

In the conventional energy storage apparatus, a structure in which the lid body of the case of the energy storage device is pressed by a part of the end plate is adopted, and thus, it is possible to suppress the damage to the container of the energy storage device due to the expansion of the container. However, the structural failure in the energy storage apparatus may be caused not only by the behavior of the energy storage device accommodated inside the outer case but also by vibration, impact, or the like applied from the outside of the outer case. Therefore, when a large external force is applied to the outer case in a collision accident or the like of a vehicle on which the energy storage apparatus is mounted, how to protect the energy storage apparatus from the external force becomes a problem.

In the above-mentioned conventional energy storage apparatus, the energy storage device is accommodated in the outer case in a posture where the electrode terminal is directed upward. However, from a viewpoint of suppressing a height (a width in a vertical direction) of the energy storage apparatus, there is a case where the energy storage device is placed in a lateral direction (in a posture where the electrode terminal is directed in a lateral direction). That is, there is a case where a conductive member such as an electrode terminal is directed in a direction susceptible to impact in a collision accident or the like, and in such a case, how to ensure safety becomes a problem. Of course, by disposing the metal body on the inner surface of the outer case on the electrode terminal side of the energy storage device, the mechanical strength of the outer case can be improved. However, in this case, since the electrode terminal, the bus bar, and the like are covered with the metal body, there arises another problem of how to ensure electrical safety.

An object of the present invention is to provide an energy storage apparatus capable of improving safety.

An energy storage apparatus according to one aspect of the present invention includes: an energy storage device including an electrode terminal; an outer case which accommodates the energy storage device, the outer case including an outer case body including an opening and a lid body which closes the opening, the outer case body including a bottom wall portion facing the lid body; and a first plate-shaped member disposed inside the outer case and disposed at an end portion of the energy storage device in a first direction which is an arrangement direction of the energy storage device and the bottom wall portion, in which the energy storage device is disposed in a posture in which the electrode terminal is directed in a second direction which is a direction intersecting with the first direction and extending along the bottom wall portion, and in which the first plate-shaped member includes a first protruding portion which protrudes more than the energy storage device in the second direction.

According to this configuration, in the energy storage apparatus including the energy storage device placed in the lateral direction, the first protruding portion of the first plate-shaped member is disposed on the second direction side where the electrode terminal is directed so as to protrude more than the energy storage device. Therefore, when any object collides with the energy storage apparatus from the second direction side, the side surface of the energy storage device on which the electrode terminal is disposed is protected by the first protruding portion. As a result, the possibility of occurrence of an unsafe event such as a short circuit due to impact at the time of collision is reduced. The first plate-shaped member does not need to be disposed in a direction (second direction) facing the electrode terminal, that is, even when the first plate-shaped member is formed of a conductive material such as metal, there is a low possibility that the electrode terminal and the first plate-shaped member are electrically connected to each other. Further, when the long side surface of the energy storage device is directed in the vertical direction, the first protruding portion can be formed at an arbitrary position along the long side surface of the energy storage device when viewed from the second direction (from the electrode terminal side). Therefore, the degree of freedom of the arrangement position or the arrangement range of the first protruding portion is high. As described above, according to the energy storage apparatus of this aspect, the safety can be improved.

The first protruding portion may protrude from an end portion of the electrode terminal in the second direction.

According to this configuration, the electrode terminal can be more reliably protected from an impact applied from the outside of the energy storage apparatus. As a result, the possibility of avoiding a situation in which the electrode terminal gets stuck inside the case is improved, and as a result, the safety of the energy storage apparatus is improved.

The energy storage apparatus may further include a bus bar joined to the electrode terminal, and the first protruding portion may be disposed so as to protrude more than the bus bar in the second direction.

According to this configuration, the bus bar and the electrode terminal to which the bus bar is joined are protected from an impact applied from the outside of the energy storage apparatus. As a result, the possibility of avoiding a situation in which the bus bar damages the energy storage device or the electrode terminal subjected to an impact via the bus bar gets stuck inside the case is improved, and as a result, the safety of the energy storage apparatus is improved.

The first protruding portion may protrude from an end portion of a gas release valve provided in the energy storage device in the second direction.

According to this configuration, the gas release valve is protected from an impact applied from the outside of the energy storage apparatus. As a result, a situation in which the gas release valve is opened by an external impact is avoided, and this contributes to improvement of safety.

A second plate-shaped member may be disposed at an end portion opposite to the first plate-shaped member with the energy storage device interposed between the first plate-shaped member and the second plate-shaped member, and the second plate-shaped member may include a second protruding portion which protrudes more than the energy storage device in the second direction.

According to this configuration, the energy storage device can be more reliably protected by the two plate-shaped members (the first plate-shaped member and the second plate-shaped member).

The first plate-shaped member and the second plate-shaped member may be disposed in a posture parallel to each other, and the first protruding portion and the second protruding portion may have the same length in the second direction.

With such a configuration, an external force is uniformly applied to the two plate-shaped members (the first plate-shaped member and the second plate-shaped member) and hence, the energy storage device can be more reliably protected.

The first plate-shaped member may include a first opening portion which allows an electric wire disposed on the second direction side of the energy storage device to pass through the first opening portion.

According to this configuration, even when the first plate-shaped member is disposed at a position where the arrangement (wiring) of the electric wire can be hindered, the electric wire can be led out to the outside of the first plate-shaped member through the first opening portion. As a result, the possibility of disconnection due to the electric wire being sandwiched between the first plate-shaped member and the inner surface of the outer case is reduced, and the degree of freedom in the arrangement layout of the electric wire is improved. When the first plate-shaped member is viewed from the arrangement direction of the first plate-shaped member and the energy storage device, it is not necessary to provide a space for allowing the electric wire to pass outside the first plate-shaped member, and thus the increase in size of the energy storage apparatus due to the provision of the space does not occur. Therefore, according to the energy storage apparatus of this aspect, the safety can be improved and the degree of freedom in the arrangement layout of the electric wire can be improved.

The first opening portion may be provided in a notch shape from an end edge of the first plate-shaped member.

According to this configuration, since the first opening portion is provided in the notch shape, the electric wire can be easily accommodated in the first opening portion (brought into a state of penetrating the first opening portion). That is, it is possible to facilitate the wiring work while improving the degree of freedom of the arrangement layout of the electric wire.

The energy storage apparatus may further include an insulating member disposed adjacent to the energy storage device in the second direction, the insulating member may include a second opening portion provided in a notch shape from an end edge of the insulating member, the second opening portion allowing the electric wire to pass through the second opening portion, and the second opening portion may be disposed so as to overlap with the first opening portion and be formed in a shape covering an inner surface of the first opening portion.

According to this configuration, electrical insulation between the first plate-shaped member formed of a conductive material such as metal and the electric wire can be more reliably performed. By forming the insulating member with a material softer than metal such as resin, damage to the electric wire due to interference between the inner surface of the first opening portion and the electric wire can be suppressed. As a result, the possibility of occurrence of a defect and an unsafe event due to the damage to the electric wire is reduced.

The energy storage device may be disposed at an endmost portion of an energy storage device array formed by arranging a plurality of energy storage devices including the energy storage device, and the first plate-shaped member may be disposed outside the energy storage device array.

According to this configuration, the first opening portion is provided in the first plate-shaped member which is an end plate. Therefore, from the viewpoint of protecting the energy storage device array, even when the size of the first plate-shaped member is made relatively large, the electric wire can be led out to the outside of the energy storage device array through the first opening portion, so that it is not necessary to arrange the electric wire while avoiding the first plate-shaped member. That is, it is possible to improve safety and simplify the wiring layout.

The first plate-shaped member may be disposed on a side opposite to the bottom wall portion with the energy storage device array interposed between the first plate-shaped member and the bottom wall portion.

According to this configuration, with respect to the energy storage device array which includes the plurality of energy storage device arranged in the vertical direction in a posture where the electrode terminal is directed in the lateral direction, the first plate-shaped member disposed above the energy storage device array is provided with the first opening portion. Accordingly, the wiring work can be easily performed in a state where the energy storage device array and the first plate-shaped member are accommodated inside the outer case. That is, it is possible to improve safety and facilitate wiring work.

Hereinafter, an energy storage apparatus according to an embodiment of the present invention (including modification examples thereof) will be described with reference to the drawings. The embodiment described below describes a comprehensive or specific example. The numerical values, shapes, materials, components, positions for arranging the components and connection forms of the components, manufacturing processes, the order of the manufacturing processes, and the like described in the following embodiment are merely examples, and are not intended to limit the present invention. In each drawing, dimensions and the like are not strictly shown. In the drawings, the same or similar components are denoted by the same reference numerals.

In the following description and drawings, a longitudinal direction of an outer case of an energy storage apparatus, an arrangement direction of an energy storage device unit and an electric device unit, an arrangement direction of a plurality of side members, an opposing direction of short side surfaces of a container of the energy storage device, and an arrangement direction of a pair of electrode terminals in one energy storage device are defined as an X-axis direction. An arrangement direction of the energy storage device and a bus bar or a bus bar frame is defined as a Y axis direction. An arrangement direction of a body and a lid body of the outer case of the energy storage apparatus, an arrangement direction of a pair of plate-shaped members, an arrangement direction of the energy storage devices, spacers, and the plate-shaped members, a facing direction of long side surfaces of the container of the energy storage device, a flattening direction of the energy storage device, a stacking direction of plates of an electrode assembly of the energy storage device, and a vertical direction are defined as a Z-axis direction. The X-axis direction, the Y-axis direction, and the Z-axis direction are directions intersecting (orthogonal in the present embodiment) with each other. Although it is considered that the Z-axis direction may not be the vertical direction depending on the usage mode, the Z-axis direction will be described below as the vertical direction for convenience of description.

In the following description, the X-axis plus direction indicates an arrow direction of the X axis, and the X-axis minus direction indicates a direction opposite to the X-axis plus direction. The same applies to the Y-axis direction and the Z-axis direction. Expressions indicating relative directions or postures, such as parallel and orthogonal include cases of being not strictly the directions or postures. Two directions being orthogonal to each other not only means that the two directions are completely orthogonal to each other, but also means that the two directions are substantially orthogonal to each other, that is, a difference of about several percent is allowed.

### (Embodiment)

### [1. General description of energy storage apparatus]

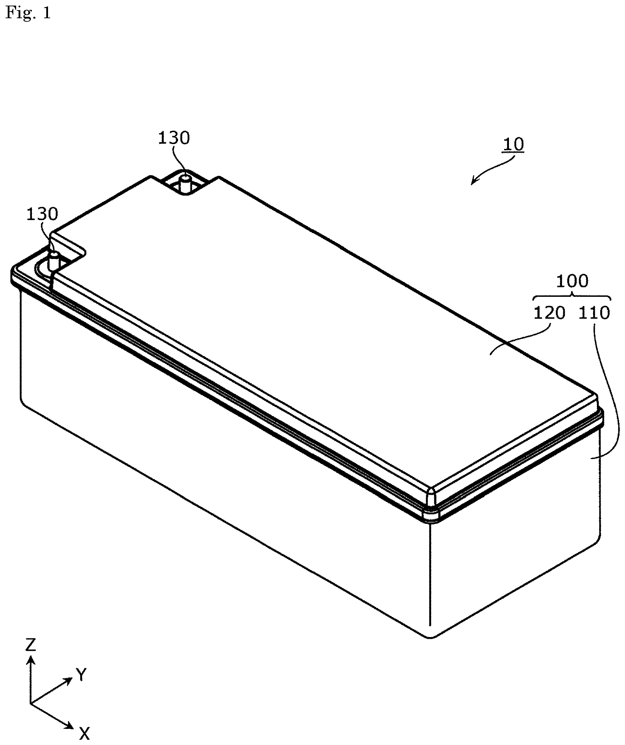

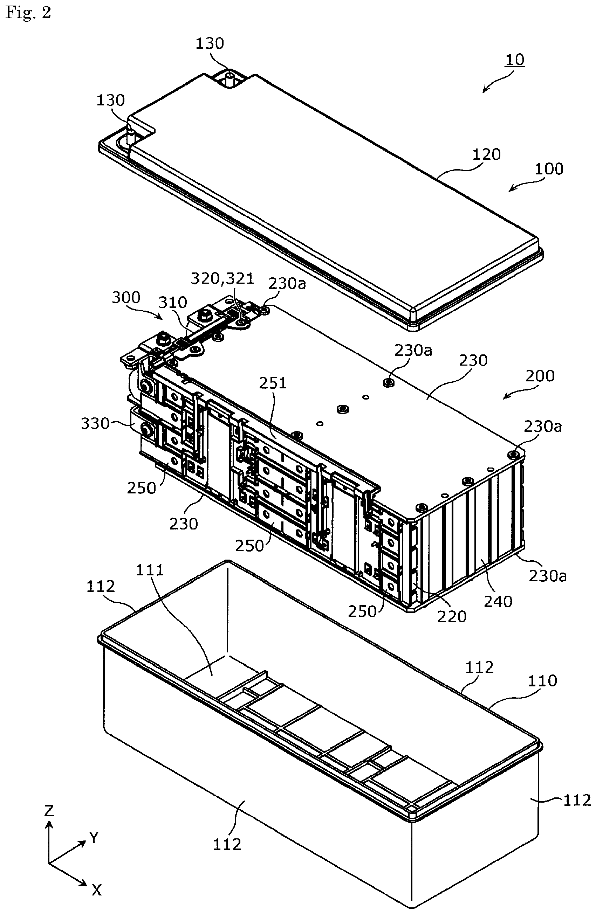

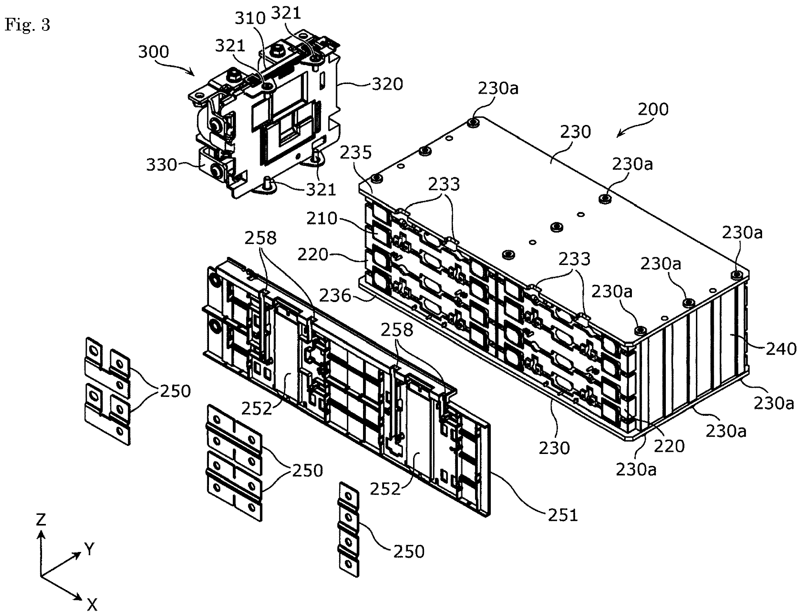

With reference to Figs. 1 to 3, a schematic configuration of an energy storage apparatus 10 in the present embodiment will be described. Fig. 1 is a perspective view showing an external appearance of the energy storage apparatus 10 according to the embodiment. Fig. 2 is a perspective view showing the inside of the outer case 100 by separating a body and a lid of an outer case 100 in the energy storage apparatus 10 according to the embodiment. Fig. 3 is an exploded perspective view showing components inside the outer case 100 of the energy storage apparatus 10 according to the embodiment in an exploded manner.

The energy storage apparatus 10 is an apparatus capable of charging electricity from the outside and discharging electricity to the outside, and has a substantially rectangular parallelepiped shape in the present embodiment. The energy storage apparatus 10 is a battery module (assembled battery) used for power storage application, power supply application, or the like. Specifically, the energy storage apparatus 10 is used as a battery or the like for driving or starting an engine of a moving body such as an automobile, a motorcycle, a watercraft, a ship, a snowmobile, an agricultural machine, a construction machine, or a railway vehicle for an electric railway. Examples of the automobile include an electric vehicle (EV), a hybrid electric vehicle (HEV), a plug-in hybrid electric vehicle (PHEV), and a gasoline vehicle. Examples of the railway vehicle for an electric railway include a train, a monorail, a linear motor car, and a hybrid train including both a diesel engine and an electric motor. The energy storage apparatus 10 can also be used as a stationary battery or the like used for home use, a generator, or the like.

As shown in Fig. 1 to Fig. 3, the energy storage apparatus 10 includes an outer case 100, an energy storage device unit 200 accommodated in the outer case 100, a bus bar frame 251, and an electric device unit 300. In addition to the above components, the energy storage apparatus 10 may include a connector or the like for transmitting a signal to the outside by being connected to the electric device unit 300 with an electric wire or the like.

The outer case 100 is a case (module case) having a box shape (substantially rectangular parallelepiped shape) which forms a casing of the energy storage apparatus 10. That is, the outer case 100 is disposed outward of the energy storage device unit 200 and the electric device unit 300, fixes the energy storage device unit and the electric device unit at a predetermined position, and protects the energy storage device unit 200 and the electric device unit 300 from an impact or the like. The outer case 100 is formed of an insulating member such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), an ABS resin, or a composite material thereof, or an insulation-coated metal. The outer case 100 thus prevents the energy storage device unit 200 and the electric device unit 300 from coming into contact with an external metal member or the like. The outer case 100 may be formed of a conductive member such as metal as long as the outer case 100 is configured to maintain electrical insulation between the outer case and the energy storage device unit 200, the electric device unit 300, and the like.

The outer case 100 includes an outer case body 110 which forms the body of the outer case 100 and a lid body 120 which closes an upper surface opening of the outer case body 110. The outer case body 110 is a bottomed rectangular cylindrical housing in which an opening is formed on a Z-axis plus direction side, and accommodates the energy storage device unit 200 and the electric device unit 300. The outer case body 110 includes a bottom wall portion 111 and four side wall portions 112.

The bottom wall portion 111 is a wall portion on an installation surface side where the energy storage apparatus 10 is installed, and is a wall portion which forms a bottom surface of the outer case body 110 arranged on a Z-axis minus direction side of the outer case body 110. When the energy storage apparatus 10 is mounted on a vehicle such as an automobile, the energy storage apparatus 10 is installed in a posture in which the bottom wall portion 111 of the outer case 100 faces an installation surface in the vehicle. The four side wall portions 112 are four flat plate-shaped and rectangular wall portions which are disposed on both sides in the X axis direction and both sides in the Y axis direction of the outer case body 110 and form two short side surfaces on both sides in the X axis direction and two long side surfaces on both sides in the Y axis direction of the outer case body 110.

The lid body 120 is a flat rectangular member which closes the opening of the outer case body 110. The lid body 120 is preferably joined to the outer case body 110 in an airtight or watertight manner by an adhesive, heat sealing, ultrasonic welding, laser welding, or the like. On the lid body 120, a pair of external terminals 130, which are a pair of module terminals (total terminals) on the positive electrode side and the negative electrode side, are disposed at both end portions in the X-axis minus direction and the Y-axis direction. The energy storage apparatus 10 charges electricity from the outside and discharges electricity to the outside through the pair of external terminals 130. The external terminal 130 is formed of a conductive member made of metal such as aluminum, an aluminum alloy, copper, or a copper alloy.

The energy storage device unit 200 is a component including one or more energy storage devices 210. In the energy storage device unit 200 according to the present embodiment, the plurality of energy storage devices 210 are arranged (stacked flat) in the Z axis direction and are arranged in the X axis direction in a state where the plurality of energy storage devices 210 are disposed in the lateral direction (laid down). With such a configuration, the energy storage device unit 200 has a flat shape in the Z axis direction and a long shape in the X axis direction. To be more specific, the energy storage device unit 200 includes a configuration in which the plurality of energy storage devices 210 arranged in the Z axis direction and the X axis direction are sandwiched between a pair of plate-shaped members 230 and a plurality of (three) side members 240 in the Z axis direction and the X axis direction together with spacers 220. The bus bar frame 251 for positioning a plurality of bus bars 250 is mounted on a Y-axis minus direction side of the energy storage device unit 200. In the present embodiment, the Z axis direction is an example of a first direction which is an arrangement direction of the energy storage devices 210 and the bottom wall portion 111 of the outer case 100, and the Y axis minus direction is an example of a second direction which is a direction intersecting with the first direction and extending along the bottom wall portion 111.

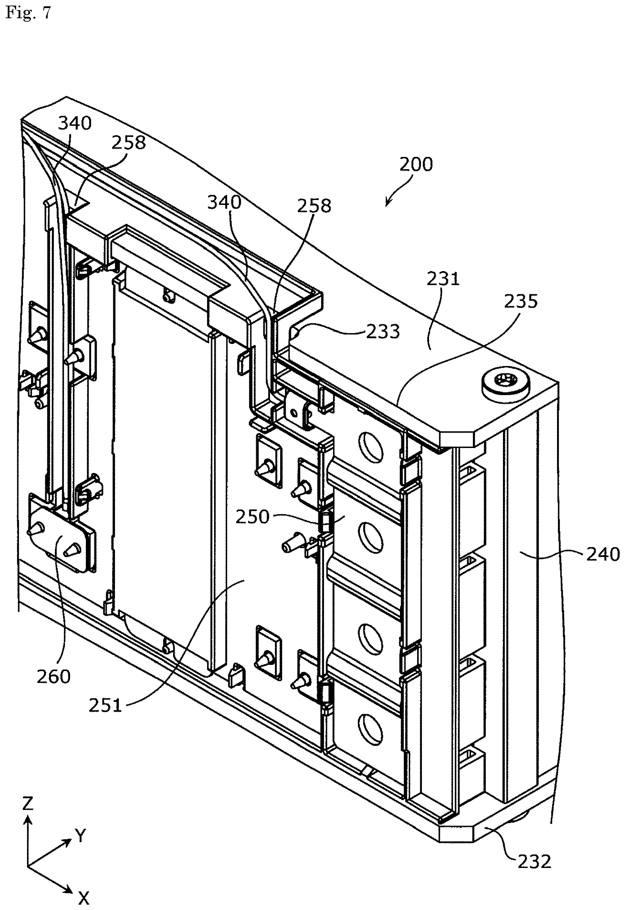

The electric device unit 300 includes an electric device 310, a mounting member 320, and a bus bar unit 330. The electric device 310 is a device capable of monitoring states of the energy storage devices 210 included in the energy storage device unit 200 and controlling the energy storage devices 210. The electric device 310 is electrically connected to the energy storage device unit 200 through electric wires (to be described later with reference to Fig. 7), so that voltages and the like of the plurality of energy storage devices 210 can be detected. In the present embodiment, the electric device 310 is a flat rectangular member which is disposed and mounted in the X axis plus direction of the energy storage device unit 200. The electric device 310 includes a circuit board that monitors a charge-discharge state of the energy storage device 210 and controls charge-discharge of the energy storage device 210, and electric components such as a shunt resistor and a connector. The electric device 310 includes a configuration in which these electric components are accommodated in an insulating cover member. The mounting member 320 is a flat plate-shaped member for mounting the electric device 310 to the energy storage device unit 200. To be more specific, the mounting member 320 is mounted on the plate-shaped members 230 and the side members 240 which are included in the energy storage device unit 200 and will be described later. In the present embodiment, the mounting member 320 is attached to the plate-shaped members 230 and the side members 240 by four bolts 321.

The bus bar unit 330 includes a bus bar, a relay, and the like, and performs electrical connection between the energy storage device unit 200 and the electric device 310, electrical connection between the electric device 310 and the external terminal 130, and electrical connection between the energy storage device unit 200 and the external terminal 130. The bus bar is formed of a conductive member made of metal such as aluminum, an aluminum alloy, copper, a copper alloy, or nickel, a combination thereof, or a conductive member other than metal.

### [2. Configuration of energy storage device unit and bus bar frame]

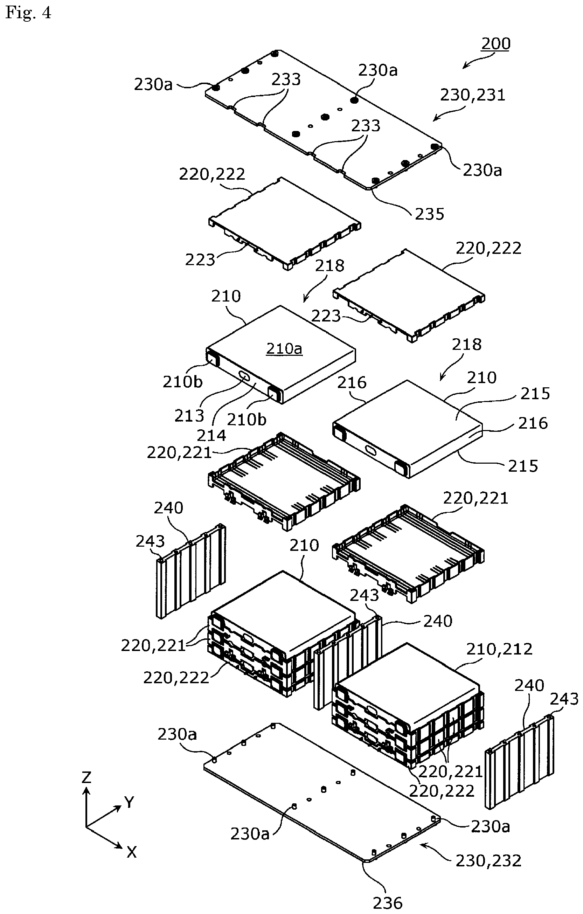

Configurations of the energy storage device unit 200 and the bus bar frame 251 according to the embodiment will be described with reference to Fig. 4 in addition to Fig. 3 described above. Fig. 4 is an exploded perspective view showing respective components of the energy storage device unit 200 according to the embodiment in an exploded manner.

As shown in Fig. 3 and Fig. 4, the energy storage device unit 200 includes the plurality of energy storage devices 210, the plurality of spacers 220 (221, 222), the pair of plate-shaped members 230 (231, 232), and the three side members 240. In the energy storage device unit 200, the bus bar frame 251 which positions the plurality of bus bars 250 is disposed on a side (Y-axis minus direction side) of the energy storage device 210 to which electrode terminals 210b are directed.

The energy storage device 210 is a secondary battery (battery cell) capable of charging and discharging electricity, and more specifically, is a nonaqueous electrolyte secondary battery such as a lithium ion secondary battery. The energy storage device 210 includes a case 210a having a flat rectangular parallelepiped shape (prismatic shape), and an electrode assembly, a current collector, an electrolyte solution, and the like accommodated in the case 210a. The case 210a is a prismatic case including a pair of long side surfaces 215 and a pair of short side surfaces 216. As shown in Fig. 4, a pair of (positive electrode side and negative electrode side) electrode terminals 210b and a gas release valve 213 are disposed on a terminal arrangement surface 214 which is a side surface of the case 210a on the Y-axis minus direction side.

The electrode assembly of the energy storage device 210 is an energy storage element (power generating element) which includes a positive electrode plate, a negative electrode plate, and a separator disposed between the positive electrode plate and the negative electrode plate. The positive electrode plate is obtained by forming a positive active material layer on a positive electrode substrate layer which is a current collecting foil made of metal such as aluminum or an aluminum alloy. The negative electrode plate is obtained by forming a negative active material layer on a negative electrode substrate layer which is a current collecting foil made of metal such as copper or a copper alloy. As the active material used for the positive active material layer and the negative active material layer, a known material can be appropriately used as long as it can occlude and release lithium ions. Examples of such an electrode assembly include a winding-type electrode assembly formed by winding plates (a positive electrode plate and a negative electrode plate) around a winding axis (virtual axis), a stacking-type electrode assembly formed by stacking a plurality of flat plate-shaped electrode plates, and a bellows-type electrode assembly formed by folding the plates in a bellows shape.

The electrode terminal 210b is a terminal (a positive electrode terminal and a negative electrode terminal) of the energy storage device 210, and is disposed in the case 210a so as to protrude in the Y-axis minus direction. The electrode terminal 210b is electrically connected to the positive electrode plate or the negative electrode plate of the electrode assembly via the current collector. The electrode terminal 210b is formed of a conductive member made of metal such as aluminum, an aluminum alloy, copper, or a copper alloy.

The gas release valve 213 provided in the case 210a is a portion that discharge the gas in the case 210a by releasing (opening) after receiving the internal pressure of the case 210a when the internal pressure of the case 210a excessively increases due to vaporization of the electrolyte solution inside the case 210a.

In the present embodiment, the eight energy storage devices 210 including the above-mentioned configuration are arranged in the Z axis direction and the X axis direction in a state where the eight energy storage devices are disposed in the lateral direction (laid down) (in a state where the long side surfaces 215 of the energy storage devices 210 are directed in the Z axis direction). To be more specific, one energy storage device array 218 is formed by arranging (stacking) four energy storage devices 210 in the Z axis direction (arrangement direction). The energy storage device unit 200 includes two energy storage device arrays 218, and these two energy storage device arrays 218 are arranged side by side in the X axis direction.

The number of the energy storage devices 210 is not particularly limited, and any number of energy storage devices 210 may be stacked (stacked flat) in the Z axis direction, or any number of energy storage devices 210 may be arranged in the X axis direction. That is, the energy storage device unit 200 may include only one energy storage device 210. The shape of the energy storage device 210 is not limited to the above-mentioned prismatic shape, and may be a polygonal columnar shape, a cylindrical shape, an elliptical columnar shape, an oval columnar shape, or the like other than the above-mentioned prismatic shape. The energy storage device 210 is not limited to the nonaqueous electrolyte secondary battery, and may be a secondary battery other than the nonaqueous electrolyte secondary battery, or may be a capacitor. The energy storage device 210 may be not a secondary battery but a primary battery that can use stored electricity unless being charged by a user. The energy storage device 210 may be a battery using a solid electrolyte. The energy storage device 210 may be a pouch type energy storage device.

The spacer 220 (221, 222) is a flat plate-shaped rectangular member which is arranged side by side with the energy storage device 210 in the Z axis direction (arrangement direction) and electrically insulates the energy storage device 210 from other members. The spacer 220 (221, 222) is formed of any electrically insulating resin material or the like that can be used for the outer case 100.

To be more specific, the spacer 221 is an intermediate spacer (inter-cell spacer) disposed adjacent to the energy storage device 210 in the Z axis direction. That is, the spacer 221 is disposed between two energy storage devices 210 disposed adjacent to each other, and electrically insulates the two energy storage devices 210 from each other.

The spacer 222 is an end spacer disposed at an end portion of the plurality of spacers 220 in the Z axis direction (arrangement direction), and is disposed along a side surface of the energy storage device 210 at the end portion in the Z axis direction. That is, the spacers 222 are disposed on both sides in the Z axis direction of the energy storage device array 218 formed of the four energy storage devices 210.

The plate-shaped members 230 and the side members 240 are members (binding members) which press (bind) the energy storage devices 210 from the outside in the Z axis direction. That is, by sandwiching the plurality of energy storage devices 210 and the plurality of spacers 220 from both sides in the Z axis direction, the plate-shaped members 230 and the side members 240 press (restrain) the respective energy storage devices 210 and the plurality of spacers 220 from both sides in the Z axis direction. The plate-shaped member 230 and the side member 240 are formed of a metal member such as stainless steel, aluminum, an aluminum alloy, iron, or a plated steel plate, but may be formed of an insulating member such as a resin having high rigidity.

The plate-shaped members 230 (231, 232) are a pair of flat plate-shaped members (end plates) which are disposed at positions sandwiching the plurality of spacers 220 (221, 222) and the plurality of energy storage devices 210 in the Z axis direction and sandwich the plurality of spacers 220 and the plurality of energy storage devices 210 in the Z axis direction. With such a configuration, a binding force in the Z axis direction is collectively applied to the plurality of energy storage devices 210 and the plurality of spacers 220 arranged in the Z axis direction. In the present embodiment, in order to distinguish the two plate-shaped members 230 arranged in the Z-axis direction, the plate-shaped member 230 on the Z-axis plus direction side among the two plate-shaped members 230 is referred to as a first plate-shaped member 231, and the plate-shaped member 230 on the Z-axis minus direction side is referred to as a second plate-shaped member 232. Both ends of the side member 240 in the Z axis direction are attached to the pair of plate-shaped members 230, and the pair of plate-shaped members 230 are connected to each other, thereby binding the plurality of energy storage devices 210 and the plurality of spacers 220. Specifically, a plurality of bolt holes 243 are provided on both end surfaces of the side member 240 in the Z axis direction, and the first plate-shaped member 231 and the second plate-shaped member 232 and the pair of side members 240 are fastened by bolts 230a screwed into the respective bolt holes 243. The method of connecting the plate-shaped member 230 and the side member 240 may be a method other than fastening using the bolts 230a, and may be welding, caulked joining, adhesion, welding, or the like.

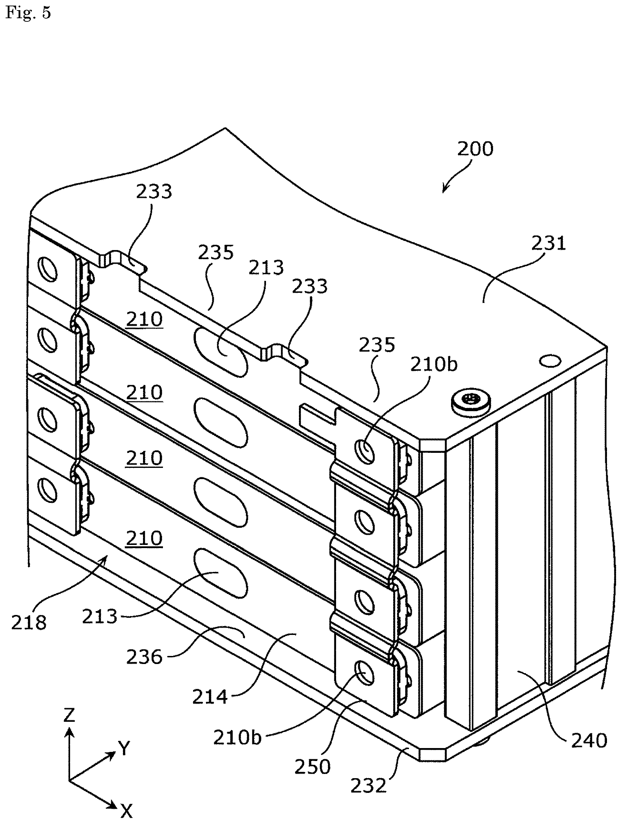

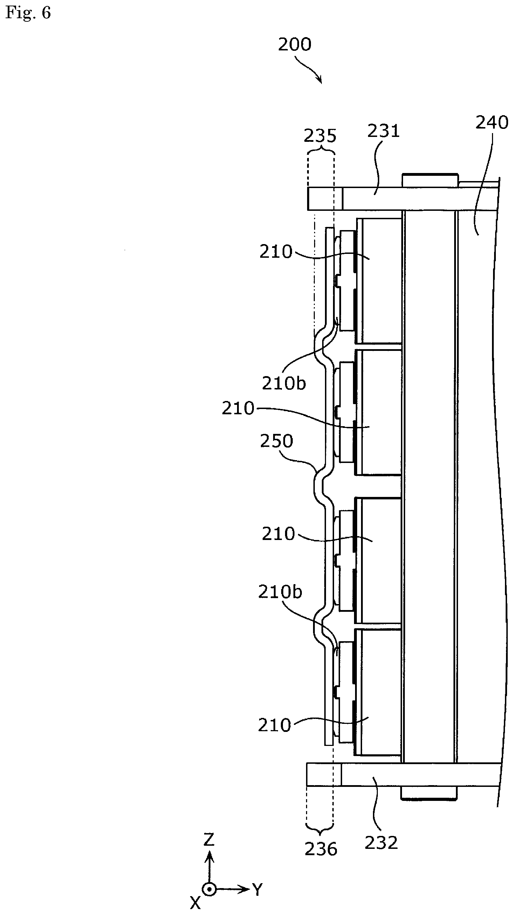

In the present embodiment, the first plate-shaped member 231 includes a first protruding portion 235 which protrudes more than the energy storage devices 210 in a direction (Y axis minus direction) in which the electrode terminals 210b of the energy storage devices 210 are directed. Similarly, the second plate-shaped member 232 also includes a second protruding portion 236 which protrudes more than the energy storage devices 210 in the Y axis minus direction. In addition, the first plate-shaped member 231 includes first opening portions 233 for allowing the electric wires to pass through the first opening portions 233 at an end portion in the Y-axis minus direction. That is, in the first plate-shaped member 231, the first protruding portion 235 extending in the X axis direction is provided with the plurality of first opening portions 233 dispersedly arranged in the X axis direction. This structure can be expressed as that the first protruding portions 235 and the first opening portions 233 are alternately arranged side by side in the X axis direction. The configuration of the first protruding portion 235 and its periphery will be described later with reference to Fig. 5 and Fig. 6. The configuration of the first opening portion 233 and its periphery will be described later with reference to Figs. 7 to 9.

The bus bars 250 are conductive members connected to the energy storage devices 210. To be more specific, the bus bars 250 are disposed in the Y axis minus direction of the plurality of energy storage devices 210, and are connected (joined) to the electrode terminals 210b of the plurality of energy storage devices 210 and the bus bar unit 330. In the present embodiment, the bus bars 250 and the electrode terminals 210b of the energy storage devices 210 are connected (joined) to each other by welding, but may be connected (joined) to each other by caulking, bolt fastening, or the like. The bus bar 250 is formed of a conductive member made of metal such as aluminum, an aluminum alloy, copper, a copper alloy, or nickel, a combination thereof, or a conductive member other than metal. In the present embodiment, two energy storage devices 210 are connected in parallel by a plurality of bus bars 250, and four sets of energy storage devices 210 connected in parallel are connected in series. The electrical connection mode of the eight energy storage devices 210 by the bus bars 250 is not limited thereto, and all the eight energy storage devices 210 may be connected in series by the plurality of bus bars 250.

The bus bar frame 251 is an example of an insulating member, and is a flat rectangular member that can electrically insulate the bus bars 250 from other members and regulate the positions of the bus bars 250. The bus bar frame 251 is formed of any electrically insulating resin material or the like that can be used for the outer case 100. The bus bar frame 251 is disposed in the Y axis minus direction of the plurality of energy storage devices 210, and is positioned with respect to the plurality of energy storage devices 210. The plurality of bus bars 250 are positioned by the bus bar frame 251. With such a configuration, each of the plurality of bus bars 250 is positioned with respect to the plurality of energy storage devices 210, and is joined to the electrode terminals 210b included in the plurality of energy storage devices 210. In the present embodiment, the bus bar frame 251 includes second opening portions 258. The second opening portion 258 is formed so as to cover the inner peripheral surface of the first opening portion 233 by being overlapped with the first opening portion 233 of the first plate-shaped member 231. Details of the second opening portion 258 will be described later with reference to Figs. 7 to 9.

### [3. Configuration of protruding portion of plate-shaped member and periphery thereof]

Next, configurations of the first protruding portion 235, the second protruding portion 236, and its periphery according to the embodiment will be described with reference to Fig. 5 and Fig. 6 in addition to Fig. 2 to Fig. 4 described above.

Fig. 5 is a perspective view showing a positional relationship between the first protruding portion 235 and the second protruding portion 236 and the energy storage devices 210 and the bus bars 250 according to the embodiment. Fig. 6 is a side view corresponding to Fig. 5. In Fig. 5 and Fig. 6, in order to easily understand a positional relationship between the first protruding portion 235 and the second protruding portion 236 and the energy storage devices 210 and the bus bars 250, the bus bar frame 251 and the spacers 220 (221, 222) are omitted and a part of the energy storage device unit 200 is shown.

As shown in Fig. 2 to Fig. 4 and Fig. 5 and Fig. 6, the energy storage apparatus 10 according to the present embodiment includes the energy storage devices 210 including the electrode terminals 210b, the outer case 100 which accommodates the energy storage devices 210, and the first plate-shaped member 231. The outer case 100 includes the bottom wall portion 111 (see Fig. 2) which is a wall portion on the installation surface side where the energy storage apparatus 10 is installed. The first plate-shaped member 231 is disposed inside the outer case 100, and is disposed at an end portion of the energy storage devices 210 in the first direction (Z axis direction) which is an arrangement direction of the energy storage devices 210 and the bottom wall portion 111. The energy storage device 210 is disposed in a posture where the electrode terminal 210b is directed in the second direction (Y-axis minus direction) which is a direction intersecting with the Z axis direction and extending along the bottom wall portion 111. As shown in Fig. 5 and Fig. 6, the first plate-shaped member 231 includes the first protruding portion 235 which protrudes more than the energy storage device 210 in the Y axis minus direction.

As described above, in the present embodiment, in the energy storage apparatus 10 including the energy storage devices 210 placed in the lateral direction, the first protruding portion 235 of the first plate-shaped member 231 is disposed on the Y-axis minus direction side where the electrode terminal 210b is directed so as to protrude more than the energy storage devices 210. Therefore, when any object collides with the energy storage apparatus 10 from the-axis minus direction side, the side surfaces of the energy storage devices 210 on which the electrode terminals 210b are disposed are protected by the first protruding portion 235. As a result, the possibility of occurrence of an unsafe event such as a short circuit due to impact at the time of collision is reduced. In addition, the first plate-shaped member 231 does not need to be disposed in a direction facing the electrode terminals 210b, that is, there is a low possibility that the first plate-shaped member 231 formed of metal such as iron or aluminum alloy and the electrode terminals 210b are electrically connected to each other. Further, the first protruding portion 235 can be provided at an arbitrary position along the long side surface of the energy storage device 210 when viewed from the electrode terminal 210b side. That is, the arrangement position of the first protruding portion 235 can be determined within a relatively wide range. Therefore, the degree of freedom of the arrangement position or the arrangement range of the first protruding portion 235 is high. As described above, according to the energy storage apparatus 10 of the present embodiment, the safety can be improved.

In the present embodiment, the first protruding portion 235 is located at end portions of the electrode terminals 210b when the energy storage devices 210 are viewed from the Y axis minus direction. To be more specific, as shown in Fig. 5, the first protruding portion 235 is disposed on the Z-axis plus direction side with respect to the plurality of electrode terminals 210b arranged in the Z axis direction in the energy storage device array 218.

According to this configuration, the electrode terminals 210b can be more reliably protected from an impact applied from the outside of the energy storage apparatus 10. As a result, the possibility of avoiding a situation where the electrode terminal 210b gets stuck inside the case 210a is improved, and as a result, the safety of the energy storage apparatus 10 is improved.

In the present embodiment, the energy storage apparatus 10 includes the bus bars 250 joined to the electrode terminals 210b, and as shown in Fig. 6, the first protruding portion 235 is disposed so as to protrude more than the bus bars in the Y axis minus direction.

According to this configuration, the bus bars 250 and the electrode terminals 210b to which the bus bars 250 are joined are protected from an impact applied from the outside of the energy storage apparatus 10. As a result, the possibility of avoiding a situation in which the bus bar 250 damages the energy storage device 210 or the electrode terminal 210b subjected to an impact via the bus bar 250 gets stuck inside the case 210a is improved, and as a result, the safety of the energy storage apparatus 10 is improved.

In the present embodiment, the first protruding portion 235 is located at an end portion of the gas release valve 213 provided on the energy storage device 210 when the energy storage devices 210 are viewed from the Y axis minus direction. To be more specific, as shown in Fig. 5, the first protruding portion 235 is disposed on the Z-axis plus direction side with respect to the plurality of gas release valves 213 arranged in the Z axis direction in the energy storage device array 218.

According to this configuration, the gas release valves 213 are protected from an impact applied from the outside of the energy storage apparatus 10. As a result, the possibility of avoiding a situation in which the gas release valve 213 is opened by an external impact is improved, and as a result, the safety of the energy storage apparatus 10 is improved.

In the present embodiment, the energy storage apparatus 10 further includes the second plate-shaped member 232 disposed at the end portion of the energy storage devices 210 at a position different from the position of the first plate-shaped member 231. The second plate-shaped member 232 includes the second protruding portion 236 which protrudes more than the energy storage devices 210 in the Y axis minus direction.

To be more specific, in the present embodiment, the two energy storage device arrays 218 arranged in the X axis direction are collectively restrained by the pair of plate-shaped members 230 (the first plate-shaped member 231 and the second plate-shaped member 232) which face each other in the Z axis direction. In this configuration, the first plate-shaped member 231 includes the first protruding portion 235 which protrudes more than the energy storage device array 218, and the second plate-shaped member 232 includes the second protruding portion 236 which protrudes more than the energy storage device array 218.

As described above, in the present embodiment, the two plate-shaped members 230 (the first plate-shaped member 231 and the second plate-shaped member 232) are disposed so as to protrude toward the electrode terminals 210b above and below the one or more energy storage devices 210. Therefore, when an impact is applied from the electrode terminal 210b side of one or more energy storage devices 210 (in the present embodiment, the eight energy storage devices 210), these energy storage devices 210 can be protected more reliably.

In the present embodiment, the first plate-shaped member 231 and the second plate-shaped member 231 are disposed in a posture parallel to each other, and the first protruding portion 235 and the second protruding portion 236 have the same length in the second direction.

With such a configuration, an external force is uniformly applied to the two plate-shaped members 230 (the first plate-shaped member 231 and the second plate-shaped member 232) and hence, when an impact is applied from the electrode terminal 210b side of one or more energy storage devices 210 (eight energy storage devices 210 in the present embodiment), these energy storage devices 210 can be more reliably protected.

### [4. Configuration of first opening portion and its periphery]

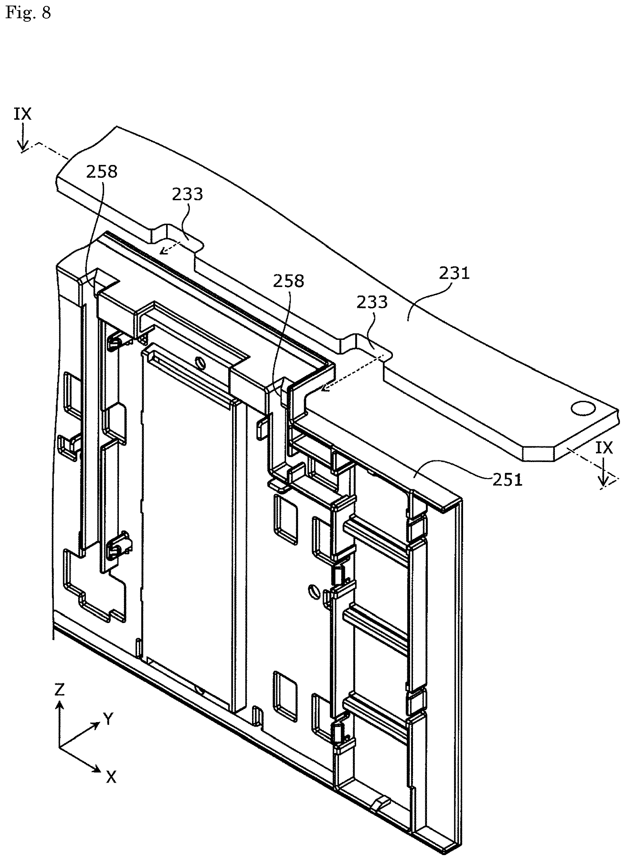

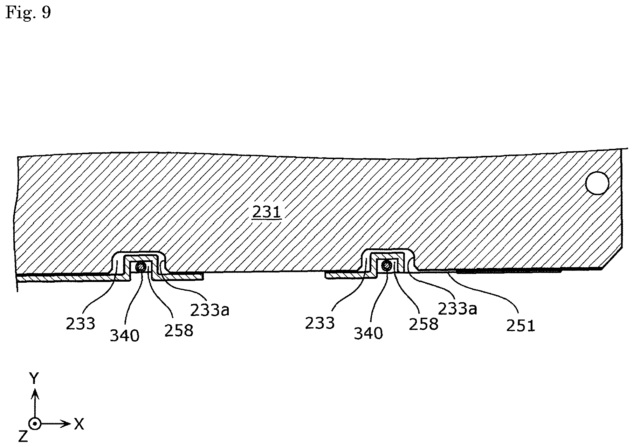

Next, a configuration of the first opening portion 233 and its periphery according to the embodiment will be described with reference to Figs. 7 to 9. Fig. 7 is a perspective view showing the configuration of the first opening portion 233 and its periphery according to the embodiment. Fig. 8 is an exploded perspective view showing a structural relationship between the first plate-shaped member 231 and the bus bar frame 251 according to the embodiment. Fig. 9 is a cross-sectional view of a state in which the first plate-shaped member 231 and the bus bar frame 251 according to the embodiment are combined. Fig. 9 shows a cross section of a part of the first plate-shaped member 231 and the bus bar frame 251 in an XY plane passing through a line IX-IX of Fig. 8.

As shown in Fig. 7, in the energy storage apparatus 10, an electric wire 340 for voltage detection is connected to the bus bar 250. A temperature detection unit 260 including a thermistor element and the like is disposed in the energy storage device unit 200, and the electric wire 340 for temperature detection is connected to the temperature detection unit 260. These electric wires 340 extend to the above-described electric device 310 (see Fig. 3), and the electric device 310 controls charge-discharge of the energy storage device unit 200 based on the detected voltage, temperature, and the like.

In such a configuration, since the bus bar 250 and the like which are connection destinations are arranged on the terminal arrangement surface 214 side (Y-axis minus direction side) of the energy storage device 210, at least a part of the electric wire 340 is arranged on the Y-axis minus direction side. However, in order to keep the electric wire 340 away from heat of the energy storage device 210 or heat at the time of bonding and sputtering, it is preferable that the length of the electric wire 340 located on the Y-axis minus direction side be short for securing a space for work of bonding the bus bar 250 and the electrode terminal 210b. Furthermore, it is preferable that the plurality of electric wires 340 be integrated into one as much as possible in order to facilitate wiring work and the like. From such a viewpoint, the present embodiment adopts a structure in which the plurality of electric wires 340 located on the Y-axis minus direction side of the energy storage devices 210 are released from the bus bar frame 251 in the Z-axis plus direction. In this case, the electric wire 340 needs to cross the first plate-shaped member 231, but in the present embodiment, the first protruding portion 235 is arranged as shown in Fig. 6 and Fig. 7 in order to improve safety. Therefore, as shown in Figs. 7 to 9, the first plate-shaped member 231 is provided with a first opening portion 233 for allowing the electric wire 340 to pass through the first opening portion 233.

That is, in the present embodiment, the first plate-shaped member 231 includes the first opening portions 233 which allow the electric wires 340 disposed on the Y-axis minus direction side of the energy storage devices 210 to pass through the first opening portions 233.

According to this configuration, even when the first plate-shaped member 231 is disposed at a position where the arrangement (wiring) of the electric wires 340 can be hindered, the electric wires 340 can be led out to the outside of the first plate-shaped member 231 through the first opening portions 233. As a result, the possibility of disconnection due to the electric wire 340 being sandwiched between the first plate-shaped member 231 and the inner surface of the outer case 100 is reduced, and the degree of freedom in the arrangement layout of the electric wire 340 is improved. When the first plate-shaped member 231 is viewed from the arrangement direction of the first plate-shaped member 231 and the energy storage devices 210, it is not necessary to provide a space for allowing the electric wires 340 to pass outside the first plate-shaped member 231, and thus the increase in size of the energy storage apparatus 10 due to the provision of the space does not occur. Therefore, according to the energy storage apparatus 10 of the present embodiment, the safety can be improved and the degree of freedom in the arrangement layout of the electric wires 340 can be improved.

In the present embodiment, as shown in Fig. 8, the first opening portion 233 is provided in a notch shape from an end edge of the first plate-shaped member 231.

Since the first opening portion 233 is provided in the notch shape as described above, the electric wire 340 can be easily accommodated in the first opening portion 233 (brought into a state of penetrating the first opening portion 233). That is, it is possible to facilitate the wiring work while improving the degree of freedom of the arrangement layout of the electric wires 340.

In the present embodiment, as shown in Fig. 7, the energy storage apparatus 10 includes an insulating member (bus bar frame 251) disposed on the Y-axis minus direction side of the energy storage devices 210. The bus bar frame 251 includes the second opening portions 258 which are provided in a notch shape from the end edge and allow the electric wires 340 to pass through the second opening portions 258. The second opening portions 258 are disposed so as to overlap with the first opening portions 233, and are formed into a shape covering inner surfaces 233a (see Fig. 9) of the first opening portions 233. That is, as shown in Figs. 7 to 9, the second opening portion 258 which is a part of the bus bar frame 251 made of an insulating material is disposed in a state of covering the inner surface 233a of the first opening portion 233 from the inside.

According to this configuration, electrical insulation between the first plate-shaped member 231 formed of a conductive material such as metal and the electric wire 340 can be more reliably performed. By forming the bus bar frame 251 using a resin more flexible than metal, it is possible to suppress damage to the electric wire 340 due to interference between the inner surface 233a of the first opening portion 233 and the electric wire 340. As a result, the possibility of occurrence of a defect and an unsafe event due to the damage to the electric wire 340 is reduced.

In the present embodiment, the first plate-shaped member 231 is disposed outside the energy storage device arrays 218 formed by arranging the plurality of energy storage devices 210.

That is, in the present embodiment, the first opening portions 233 are provided in the first plate-shaped member 231 which is an end plate. Therefore, from the viewpoint of protecting the energy storage device arrays 218, even when the size of the first plate-shaped member 231 is made relatively large, that is, even when the protruding amount of the first protruding portion 235 is made large, the electric wires 340 can be led out to the outside of the energy storage device arrays 218 through the first opening portions 233. Therefore, it is not necessary to arrange the electric wires 340 while avoiding the first plate-shaped member 231. That is, it is possible to improve safety and simplify the wiring layout.

In the present embodiment, the first plate-shaped member 231 is disposed on a side opposite to the bottom wall portion 111 with the energy storage device arrays 218 interposed between the first plate-shaped member 231 and the bottom wall portion 111.

According to this configuration, with respect to the energy storage device arrays which include the plurality of energy storage devices 210 arranged in the vertical direction in a posture where the electrode terminals 210b are directed in the lateral direction, the first plate-shaped member 231 disposed above the energy storage device arrays 218 is provided with the first opening portions 233. Accordingly, the wiring work can be easily performed in a state where the energy storage device arrays 218 and the first plate-shaped member 231 are accommodated inside the outer case 100. That is, it is possible to improve safety and facilitate wiring work.

### [5. Modification example]

Although the energy storage apparatus 10 according to the embodiment of the present invention has been described above, the present invention is not limited to this embodiment. That is, the embodiment disclosed herein is illustrative in all respects and is not restrictive, and the scope of the present invention includes all modifications within the meaning and scope equivalent to the claims.

In the present embodiment, out of the first plate-shaped member 231 and the second plate-shaped member 232, the first plate-shaped member 231 is disposed at a position far from the bottom wall portion 111 (see Fig. 2) of the outer case 100, and the second plate-shaped member 232 is disposed at a position close to the bottom wall portion 111. However, the positional relationship between the first plate-shaped member 231 and the second plate-shaped member 232 in the Z axis direction may be reversed. That is, with respect to the energy storage device 210 accommodated in the outer case 100 in a posture where the electrode terminals 210b are directed in the lateral direction, it is sufficient that the plate-shaped member located at the end portion in the arrangement direction of the bottom wall portion 111 and the energy storage devices 210 includes the protruding portion which protrudes more than the energy storage devices 210 in the direction in which the electrode terminals 210b are directed. With such a configuration, the protruding portion can exert an effect of protecting the energy storage devices 210 and hence, the safety of the energy storage apparatus 10 can be enhanced.

The first plate-shaped member and the second plate-shaped member each including the protruding portion may not be disposed in a posture parallel to each other. The side member 240 disposed in a posture orthogonal to the first plate-shaped member 231 including the first protruding portion 235 may include the second protruding portion 236 protruding toward the Y-axis minus direction side with respect to the energy storage devices 210. Even in this case, the plurality of energy storage devices 210 can be protected in a relatively wide range by at least two protruding portions.

Positions, numbers, shapes, and arrangement ranges of the first protruding portion 235 and the second protruding portion 236 shown in Fig. 3, Fig. 4, and the like are merely examples, and are not limited by these drawings. The second protruding portions 236 may be dispersedly arranged along the end edge of the second plate-shaped member 232 on the Y-axis minus direction side. Each of the first protruding portion 235 and the second protruding portion 236 may be disposed only in a portion close to an element (such as the electrode terminal 210b) having the highest protection priority.

The first plate-shaped member 231 including the first opening portions 233 may be disposed between the energy storage device arrays 218 and the bottom wall portion 111 of the outer case 100. Even in this case, since the bus bar frame 251 includes the second opening portions 258 at positions overlapping with the first opening portions 233, the electric wire 340 can be wired between the bus bar 250 and the like on the Y-axis minus direction side of the energy storage device 210 and the electric device 310 without directly contacting the first plate-shaped member 231.

The first opening portion 233 does not need to be provided in a notch shape from the end edge of the first plate-shaped member 231. The first opening portion 233 may be provided in the first plate-shaped member 231 as a through hole penetrating the first plate-shaped member 231 in the thickness direction.

It is not essential that the first plate-shaped member 231 be provided with the first opening portions 233. When it is not necessary to cause the electric wires 340 to go beyond the first plate-shaped member 231, such as when a space for arranging the electric wire 340 can be sufficiently secured on the bus bar frame 251, the first plate-shaped member 231 may not include the first opening portions 233.

The first plate-shaped member including the first protruding portions 235 is not required to be an end plate which binds the plurality of energy storage devices 210 (the energy storage device arrays 218) arranged in the Z axis direction like the first plate-shaped member 231 according to the embodiment. The first protruding portion 235 may be provided on a first plate-shaped member which is a spacer disposed along any side surface of the energy storage device array 218. Even in this case, the effect of protecting one or more energy storage devices 210 by the first protruding portion 235 is exerted.

The energy storage device unit 200 may not include the spacer 221 which is an inter-cell spacer when each of the cases 210a of the plurality of energy storage devices 210 is wrapped with an insulating film. The energy storage device unit 200 may not include the spacer 222 which is an end spacer regardless of the presence or absence of the spacer 221. That is, it is not essential for the energy storage device unit 200 to include the spacer 220. Even when the energy storage device unit 200 does not include the spacer 220, the effect of protecting one or more energy storage devices 210 by the first protruding portion 235 of the first plate-shaped member 231 is exerted.

A form constructed by freely combining the components included in the above-mentioned embodiment and the modification examples thereof is also included in the scope of the present invention.

### INDUSTRIAL APPLICABILITY

The present invention can be applied to an energy storage apparatus including an energy storage device such as a lithium ion secondary battery.

### DESCRIPTION OF REFERENCE SIGNS

10: energy storage apparatus
100: outer case
111: bottom wall portion
210: energy storage device
210b: electrode terminal
214: terminal arrangement surface
215: long side surface
216: short side surface
218: energy storage device array
230: plate-shaped member
231: first plate-shaped member
232: second plate-shaped member
233: first opening portion
233a: inner surface
235: first protruding portion
236: second protruding portion
250: bus bar
251: bus bar frame
258: second opening portion
260: temperature detection unit
310: electric device
340: electric wire

## Claims

1. An energy storage apparatus comprising:
an energy storage device including an electrode terminal;
an outer case which accommodates the energy storage device, the outer case including: an outer case body including an opening; and a lid body which closes the opening, the outer case body including a bottom wall portion facing the lid body; and
a first plate-shaped member disposed inside the outer case and disposed at an end portion of the energy storage device in a first direction which is an arrangement direction of the energy storage device and the bottom wall portion,
wherein the energy storage device is disposed in a posture in which the electrode terminal is directed in a second direction which is a direction intersecting with the first direction and extending along the bottom wall portion, and
wherein the first plate-shaped member includes a first protruding portion which protrudes more than the energy storage device in the second direction.

2. The energy storage apparatus according to claim 1, wherein the first protruding portion protrudes from an end portion of the electrode terminal in the second direction.

3. The energy storage apparatus according to claim 2, further comprising a bus bar joined to the electrode terminal,
wherein the first protruding portion is disposed so as to protrude more than the bus bar in the second direction.

4. The energy storage apparatus according to any one of claims 1 to 3, wherein the first protruding portion protrudes from an end portion of a gas release valve provided in the energy storage device in the second direction.

5. The energy storage apparatus according to any one of claims 1 to 4, further comprising a second plate-shaped member disposed at an end portion opposite to the first plate-shaped member with the energy storage device interposed between the first plate-shaped member and the second plate-shaped member,
wherein the second plate-shaped member includes a second protruding portion which protrudes more than the energy storage device in the second direction.

6. The energy storage apparatus according to claim 5,
wherein the first plate-shaped member and the second plate-shaped member are disposed in a posture parallel to each other, and
wherein the first protruding portion and the second protruding portion have the same length in the second direction.

7. The energy storage apparatus according to any one of claims 1 to 6, wherein the first plate-shaped member includes a first opening portion which allows an electric wire disposed adjacent to the energy storage device in the second direction to pass through the first opening portion.

8. The energy storage apparatus according to claim 7, wherein the first opening portion is provided in a notch shape from an end edge of the first plate-shaped member.

9. The energy storage apparatus according to claim 8, further comprising an insulating member disposed adjacent to the energy storage device in the second direction,
wherein the insulating member includes a second opening portion provided in a notch shape from an end edge of the insulating member, the second opening portion allowing the electric wire to pass through the second opening portion, and
wherein the second opening portion is disposed so as to overlap with the first opening portion and is formed in a shape covering an inner surface of the first opening portion.

10. The energy storage apparatus according to any one of claims 7 to 9,
wherein the energy storage device is disposed at an endmost portion of an energy storage device array formed by arranging a plurality of energy storage devices including the energy storage device, and
wherein the first plate-shaped member is disposed outside the energy storage device array.

11. The energy storage apparatus according to claim 10, wherein the first plate-shaped member is disposed on a side opposite to the bottom wall portion with the energy storage device array interposed between the first plate-shaped member and the bottom wall portion.
